**Europäisches Patentamt**

**European Patent Office**

**Office européen des brevets**

(19)

(11) Publication number : **0 469 955 A2**

# EUROPEAN PATENT APPLICATION

(12)

(21) Application number : **91402023.5**

(22) Date of filing : **19.07.91**

(51) Int. Cl.⁵ : **H04M 1/19**

(30) Priority : **30.07.90 JP 201792/90**
**08.03.91 JP 69045/90**

(43) Date of publication of application :
**05.02.92 Bulletin 92/06**

(84) Designated Contracting States :
**AT BE CH DE DK ES FR GB GR IT LI LU NL SE**

(71) Applicant : **Kitagawa, Shuji**
**17217-882 Haramura**
**Suwa-gun, Nagano (JP)**

(72) Inventor : **The designation of the inventor has**
**not yet been filed**

(74) Representative : **Rodhain, Claude et al**
**Cabinet Claude Rodhain 30, rue la Boétie**
**F-75008 Paris (FR)**

(54) **Transmitter-receiver handset.**

(57)    This invention relates to a handset having a receiver (A) and a transmitter (B) in a unitary unit. This handset includes in its casing (6) a detector (5) for detecting the vibration produced in each tissue of the head of people by the voice of a user, vibration-proofing means (7) for the detector, an air chamber (9) defined between the detector and the body of the user, an equalizer circuit (10) for processing electric signals sent from the detector and a sound generation member (21) .
   The sound other than the voice of the user is cut off and is not detected due to the operation of the vibration means (7) and the air chamber (9), the handset can be used without any problem under the situation of excessive noise.

EP 0 469 955 A2

# FIG. 2

Background of the Invention:

Field of the Invention:

This invention relates to a handset including a receiver and a transmitter in a unitary structure, and a compact handset which will be suitable for use in those places where external sound is great, external sound not desired to be mixed with exists, whistling sound is great, and so forth.

Description of the Prior Art:

A conventional handset detects the sound of a user by a microphone, or the like. Therefore, the voice of the user and there remains the problem that the sound which should not be sent to the other party is sent, too.

Some improvements can be made in the conventional handset by the use of a microphone having high directivity, for example, but a shield effect of the external sound is not sufficient because the external sound contains not only the sound directly from the sound source but also large quantities of reflected sounds.

In the handset including the receiver and the transmitter in a unitary structure, the transmitter is generally disposed at the mouth. In order to detect the voice of the user with high quality, too, it is customary to dispose the speaking device near the lips and the mouth. Accordingly, the distance between the receiver, which is disposed near the ear, and the transmitter which is disposed near the mouth, must be reflected essentially in the design, and this raises a problem when the size of the handset is reduced as a whole.

The distance from the ear to the mouth of adult is generally about 15 cm which is not the dimension to allow the apparatus to be carried in a pocket. This becomes a critical problem in a mobile wireless handset.

Summary of the Invention:

The conventional handset is not free from various problems as described above.

It is therefore an object of the present invention to provide a high performance handset which detects only the voice of a speaker even when used under the environment where the external sound is great, prevents the external sound from being sent to the other party, and can send the sound having tone quality approximate to tone quality of the sound which is obtained by an ordinary microphone.

It is another object of the present invention to provide a pocketable handset.

The handset in accordance with the present invention is a handset which includes a receiver and a transmitter in a unitary structure and is characterized in that it includes in its casing a detector for detecting the vibration produced in each tissue of the head of people by the voice of a user, vibration-proofing means for the detector, an air chamber defined between the detector and the body of the user, an equalizer circuit for processing electric signals sent from the detector and a sound generation member.

Since the vibration-proofing means and the air chamber cut off the sound other than the voice of the user and prevent it from being detected, the handset can be used without any problem even under the high noise situation. Since the portion detecting the vibration is located close to the ear, the handset can be made considerable compact so as to be pocketable.

These and other objects, features and advantages of the present invention will become more apparent from the following description when taken in conjunction with the accompanying drawings.

Brief Description of the Drawings:

Fig. 1 is an explanatory view showing the path of a sound when the handset of the invention is in use;

Fig. 2 is a longitudinal sectional view showing an example of the construction of the handset to which the present invention is applied;

Fig. 3 is a sectional view showing a microphone which is used suitably in the present invention; and

Fig. 4 is a longitudinal sectional view showing another embodiment of the present invention.

Description of the Preferred Embodiments:

Preferred embodiments of the present invention will now be explained with reference to the accompanying drawings.

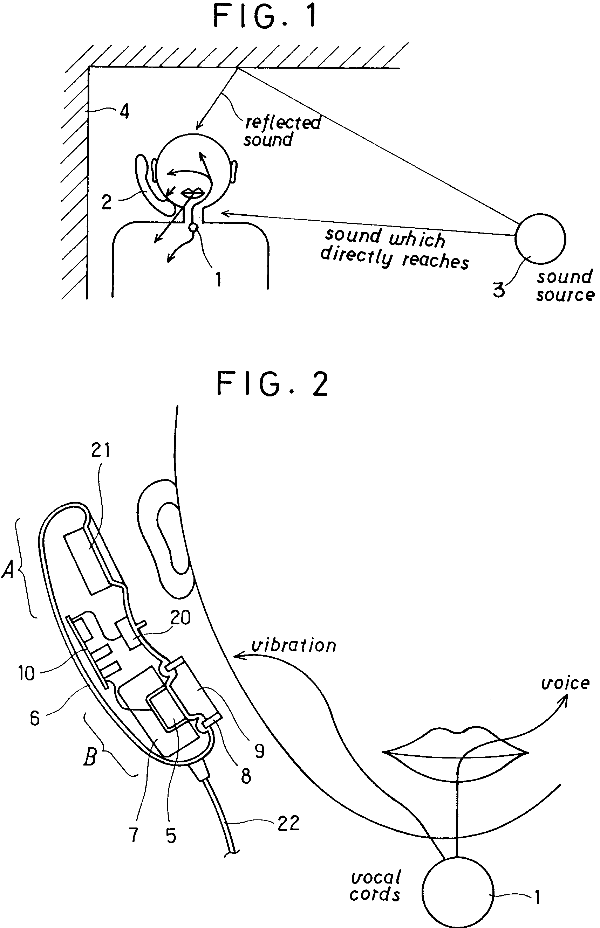

Fig. 1 is an explanatory view useful for explaining the path of a sound when the handset is in use. The sound source of the speech is the vibration of the vocal cords of a user and is emitted as air vibration from his mouth. At the same time, this vibration reaches a transmitter 2 of the handset through the vibration of the skin of the head of people. The vibration of the vocal cords is also diffused and transmitted to each part of the human body through living body tissues as a medium. On the other hand, besides a path of an external sound which reaches directly the handset from the sound source, there is another path which reaches the handset after being reflected by structures 4 such as walls. Besides the external sound which directly reaches the transmitter, there is an indirect incoming path for the external sound in which the sound wave vibrates the casing of the handset, and a detector detects that vibration.

Fig. 2 shows a structural example of the handset to which the present invention is applied. The handset can be broadly divided into two constituent units, that is, a receiver A and a transmitter B. The receiver A, having a sound generation member 21, is used while being put to an ear while the transmitter B is used while being put to a cheek near the ear. A detector 5 is isolated by a vibration-proofing device 7 so that the vibration through the casing 6 of the handset does not directly reach the detector 5. Isolation can be accomplished without using, or using singly or in combination the vibration-proofing device 7, by selecting a suitable material for the casing 6 itself or by applying suitable vibration-proofing material such as a putty to the casing 6. A seal 8 for preventing entry of the external sound is provided between the head of the user and the receiver and an air chamber 9 is defined inside the seal 8. The detector 5 may be a pickup which detects the vibration of the skin tissue as acceleration or an ordinary microphone. When the microphone is used, however, the air chamber 9 having a sufficiently large capacity must be defined between the skin tissue and the detector because the microphone detects the vibration of the skin tissue after converting it to the sound wave. In other words, the internal pressure of the air chamber 9 changes with the vibration of the skin and if the capacity of the air chamber 9 is too small, the change of the internal pressure becomes great due to a large vibration in a low-pitched sound range and the high-pitched sound range of the detected sound signals is modulated by the low-pitched sound range.

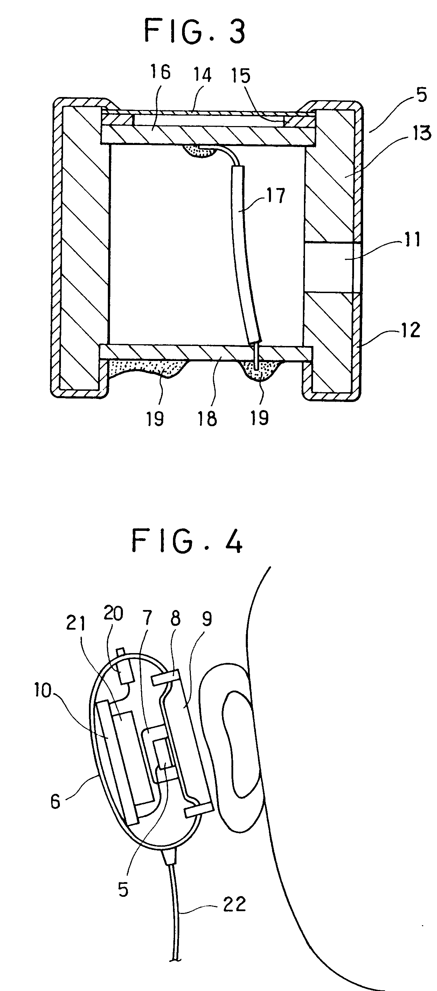

The frequency characteristics of the voice obtained by the skin vibration are greatly attenuated in the high-pitched sound range and consequently, the high-pitched sound range must be stressed by an equalizer circuit 10. If the high-pitched sound range is modulated by the low-pitched sound range, however, the voice will become an unclear or eccentric voice. For this reason, the air chamber 9 must have a capacity such that the detector 5 does not cause modulation due to the change of the internal pressure. If it is desired to reduce the capacity of this air chamber, a microphone or the like, which does not cause easily the modulation, may be used but preferably, a microphone equipped with a pressure regulating hole 11 having a suitable size as shown in Fig. 3 is used. If this microphone is used, the change of the internal pressure does not occur in the air chamber 9. Accordingly, the capacity of the air chamber 9 can be reduced to several cubic centimeters, so that the apparatus can be made compact as a whole. Reference numeral 12 in Fig. 3 denotes a shield case; 13 is a microphone case; 14 is a film; 15 is a spacer; 16 is a fixed electrode; 17 is a cable; 18 is a terminal plate; and 19 is a solder. As means for reducing the change of the internal pressure, a metal net or a punched metal may be disposed on the contact surface between the apparatus and the skin and by so doing, the low-pitched sound components having large amplitudes among the skin vibration can be reduced.

Fig. 2 shows the structure when a microphone is used as the detector 5. The voice of the speaker emitted from his vocal cords 1 propagates through each tissue of this head due to the transmission of the vibration of the vocal cords and vibrates the tissues near the detector 5. Since the tissues of the human body function as a low-pass filter for the vibration of the voice band, the damping quantity of the vibration propagating through the tissues become greater with a higher pitch of the voice. The vibration that reaches the transmitter B is detected by the detector 5 and is converted to electric signals. The electric signals are sent to the equalizer circuit 10 and are processed in such a manner as to approach the frequency distribution as detected as the voice. In other words, if the frequency distribution of the vibration in the tissues of the head is handled as the frequency distribution when detected as the voice, the high-pitched sound range becomes insufficient and the resulting voice becomes unnatural. Therefore, the damped high-pitched sound range is restored by the equalizer circuit 10 and is converted to the speech signal approximate to the natural voice. The external sound is cut off by the shield 8 and does not directly reach the detector 5. The vibration-proofing device 7 is disposed in order to prevent the external sound from reaching the detector 5 through the casing 6 of the speech apparatus. If a selector switch 20 for making the equalizer circuit 10 effective or ineffective is disposed in the casing 6, the handset can be used as an ordinary one. If this selector switch 20 is disposed, howling that might otherwise occur due to the operation of the equalizer circuit 10 can be avoided. This selector switch 20 is used as a mechanism for detecting the contact of the apparatus with the human body, its presence in the proximity of the human body and a manual operation.

Fig. 4 is a structural view when the present invention is applied to a miniature handset. The vibration of the vocal cords of the speaker propagates to the portions near his ear with sufficient intensity for detection. Therefore, the detector 5 is disposed inside the receiver as shown in the drawing, and the receiver and the transmitter can be integrated with each other. When a dynamic speaker, or the like, is used as a sound generation member 21 of the receiver, it can also be used as the detector, too, and in such a case, the apparatus can be made further compact. Reference numeral 22 denotes a signal cable of the handset.

As described above, the present handset is suitable for use in the environment where the external sound is great or the external sound not desired to be mixed with exists.

## Claims

1 - A handset including a receiver (A) and a transmitter (B) in a unitary structure, characterized in that a detector (5) for detecting the vibration produced in each tissue of the head of people by the voice of a user, vibration-proofing means (7) for said detector, an air chamber (9) defined between said detector and the body of the user, an equalizer circuit (10) for processing electric signals sent from said detector and a sound generation member (21) are disposed in a casing (6).

2 - A handset according to claim 1, wherein said air chamber (9) includes a seal (8) having a surrounding wall on the surface side of said detector (5) so as to secure a cavity.

3 - A handset according to claim 1, wherein a dynamic speaker or like means is used as said sound generation member (21), and is also used as said detector (5).

4 - A handset according to claim 1, wherein a microphone having a pressure regulating hole (11) is used as said detector (5).

# FIG. 1

reflected sound

4

2

1

sound which directly reaches

3 sound source

# FIG. 2

21

A

20

10

6

B

9

8

7 5

22

vibration

voice

vocal cords

1

1

# FIG. 3

# FIG. 4